Europäisches Patentamt

European Patent Office

Office européen des brevets

(19)

(11) **EP 0 557 591 B1**

(12) **EUROPÄISCHE PATENTSCHRIFT**

(45) Veröffentlichungstag und Bekanntmachung des Hinweises auf die Patenterteilung:
**17.04.1996  Patentblatt 1996/16**

(51) Int Cl.[6]: **G01C 25/00**, G01C 21/16, G01C 19/42

(21) Anmeldenummer: **92120363.4**

(22) Anmeldetag: **28.11.1992**

(54) **Einrichtung zur Bestimmung der relativen Orientierung eines Körpers**

Device for determining the relative orientation of a body

Dispositif pour déterminer l'orientation relative d'un corps

(84) Benannte Vertragsstaaten:
**DE ES FR GB IT**

(30) Priorität: **26.02.1992 DE 4205869**

(43) Veröffentlichungstag der Anmeldung:
**01.09.1993  Patentblatt 1993/35**

(73) Patentinhaber: **TELDIX GmbH**
**D-69046 Heidelberg (DE)**

(72) Erfinder:
• **Pickhard, Friedhelm**
**W-6930 Eberbach (DE)**

• **Liebscher, Franz**
**W-6900 Heidelberg 1 (DE)**
• **Neidhardt, Wolfgang**
**W-6900 Heidelberg (DE)**

(74) Vertreter: **Wiechmann, Manfred, Dipl.-Ing.**
**Robert Bosch GmbH**
**Patentabteilung**
**Postfach 30 02 20**
**D-70442 Stuttgart (DE)**

(56) Entgegenhaltungen:
EP-A- 0 326 256          EP-A- 0 335 116
EP-A- 0 414 057          GB-A- 1 141 385
GB-A- 1 299 822          US-A- 3 731 543

## Beschreibung

Die Erfindung betrifft eine Einrichtung zur Bestimmung der relativen Orientierung eines Körpers gegenüber einer Referenzorientierung, mit einer beweglichen Orientierungssensoreinheit.

Aus der japanischen Patentanmeldung JP 60-158310 (A) (veröffentlicht in Patents Abstracts of Japan, P-417, December 27, 1985, Vol. 9/No. 334) ist eine Winkelmeßeinrichtung bekannt, die eine Sensoreinheit mit mehreren Kreiseln aufweist, deren Achsen rechtwinklig zueinander angeordnet sind. Die Meßeinrichtung ist in einem Gehäuse angeordnet, das zwei planparallele Außenflächen aufweist. Außerdem ist eine Rechnereinheit vorgesehen, welche die Winkelgeschwindigkeitsignale von der Sensoreinheit verarbeitet und den Winkel zwischen zwei zu vermessenden Ebenen liefert. Eine der planparallelen Ebenen der Sensoreinheit wird an die erste zu vermessende Ebene gelegt, dann wird die Sensoreinheit zur anderen zu vermessenden Ebenen geführt; dort wird letztere mit der zweiten planparallelen Ebene der Sensoreinheit kontaktiert. Während des gesamten Vorganges werden die Komponenten der Drehwinkelgeschwindigkeit der Sensoreinheit durch die entsprechenden Kreisel gemessen, und die Rechnereinheit errechnet den Winkel zwischen den zu messenden Ebenen und zeigt das Ergebnis an.

Ähnlich läuft ein Verfahren zur Messung von Winkeln ab, das in der deutschen Patentanmeldung DE 40 21 793 A1 beschrieben ist.

In vielen Anwendungsfällen muß die Orientierung eines Körpers, beispielsweise einer Baugruppe, relativ zu einer Referenzorientierung in einem Referenzkoordinatensystem bestimmt werden können. Beispiele hierfür finden sich überall dort, wo Daten von koordinatenbezogenen Sensoren (z.B. Dopplerradar, inertiale Sensoreinheiten) verknüpft werden, oder im Maschinenbau, wo die Werkzeugorientierung einer numerisch gesteuerten Maschine unter Belastung bestimmt werden muß.

In der Luftfahrtindustrie ist es üblich, die Orientierung von Baugruppen oder von deren Aufnahmevorrichtungen bezogen auf eine Referenzfläche optisch, d.h. durch Autokollimation, zu vermessen.

In der US-Patentschrift 3,731,543 ist ein gyroskopisches Ausrichtungssystem beschrieben, bei dem Inertial-Sensoren benutzt werden, um aufgrund von Drehbewegungen eine Winkellage eines Flugzeugteiles zu bestimmen. Dabei ist ein Muttersensor mit zwei Kreiselsystemen vorgesehen, der während eines Bestimmungsvorganges längs einer Referenzlinie montiert ist. Ein Tochtersensor mit nur einem Kreiselsystem ist während des Bestimmungsvorganges an dem Flugzeugteil befestigt, dessen Winkellage in Bezug auf die Referenzlinie zu bestimmen ist. Das System vergleicht die Winkelbewegungen des Flugzeugs einerseits auf der Referenzlinie und andererseits am Flugzeugteil, um dessen falsche Ausrichtung bezüglich einer Parallelen zur Referenzlinie zu erkennen. Dabei werden diese Winkelbewegungen vom Muttersensor bzw. vom Tochtersensor erfaßt, während sich diese Sensoren an der Referenzlinie bzw. am Meßort des Flugzeugteiles befinden. Damit die Sensoren an ihren Meßorten überhaupt Winkelveränderungen feststellen können, müssen sich die Meßorte bewegen. Die Arbeitsweise dieses bekannten Systems setzt also voraus, daß das Flugzeug während des Bestimmungsvorganges sowohl an der Referenzlinie als auch am Meßort des Tochtersensors Winkelbewegungen ausführt, was beispielsweise auf einem Flugzeugträger aufgrund des Wellengangs tatsächlich der Fall ist.

In der britischen Patentschrift 1 299 822 ist ein selbstkalibrierendes System für Navigationsinstrumente beschrieben, bei dem zwei Kreiselsysteme auf einer Plattform vorgesehen sind, von denen eines zu Kalibrierungszwecken nacheinander um 180° und um 90° um seine Spinachse geschwenkt wird, während bei dem anderen Kreiselsystem nur eine Schwenkung um 90° vorgenommen wird. Die in den verschiedenen Schwenklagen erfaßten Meßwerte erlauben die Ermittlung von Driftkoeffizienten.

Durch die Erfindung soll eine Einrichtung bzw. ein Verfahren zur Bestimmung der relativen Orientierung eines Körpers geschaffen werden, womit die Bestimmung auch dann ermöglicht wird, wenn der Körper und die Referenzfläche während des Bestimmungsvorganges keine Winkelbewegungen ausführen.

Im Anspruch 1 ist eine entsprechende Einrichtung angegeben, zu welcher die Einrichtung nach Anspruch 2 eine Weiterbildung darstellt. Die Ansprüche 3 und 4 beziehen sich auf ein Verfahren zur Kalibrierung der Einrichtung nach Anspruch 2. Die restlichen Ansprüche betreffen ein Verfahren entsprechend der Einrichtung.

Die Einrichtung nach der Erfindung ist zur Durchführung eines Verfahrens geeignet, mit dem sich die relative Orientierung einer Baugruppe bezogen auf eine Referenzorientierung mittels inertialer Winkelgeschwindigkeitssensoren bestimmen läßt. Die Referenzorientierung kann beispielsweise durch eine Referenzfläche gegeben sein, die sich an einem Referenzkörper befindet. Die inertialen Winkelgeschwindigkeitssensoren werden im allgemeinen als Kreisel bezeichnet.

Bei dem mit der erfindungsgemäßen Einrichtung durchführbaren Meßverfahren werden die Winkelgeschwindigkeiten des Referenzkörpers und diejenigen einer Orientierungssensoreinheit gemessen, welche von dem Referenzkörper zu dem Körper (hier: Baugruppe), der vermessen werden soll, bewegt wird. Aus beiden Meßinformationen wird die relative Orientierung des Körpers gegenüber dem Referenzkörper berechnet.

Damit ergeben sich folgende Vorteile:

Das zu vermessende System braucht sich während der Messung nicht zu bewegen, es darf sich aber bewegen;

das gilt für den Referenzkörper allein, den zu vermessenden Körper sowie für beide zusammen. Außerdem müssen geophysikalische Größen wie z. B. die Erddrehrate nicht berücksichtigt werden, da nur die relative Orientierung berechnet wird, ohne auf ein erdfestes Koordinatensystem Bezug zu nehmen.

Zur näheren Erläuterung der Erfindung ist in den Zeichnungen folgendes dargestellt:

Fig. 1: Prinzipieller Aufbau der Einrichtung nach der Erfindung.

Fig. 2: Verschiedene Phasen des Meßvorganges.

Fig. 3: Beispiel für die Orientierung der Koordinatenachsen während der Kalibrierung.

Fig. 4: Prinzipielle Schaltungsaufbauten zur Bestimmung von Summen- und Differenzkomponenten aus WinkelgeschwindigkeitsDriftkomponenten für die Kalibrierung der Einrichtung nach Fig. 1.

Fig. 5: Darstellung von Schwenkachsen von inertialen Winkelgeschwindigkeitssensoren zur Driftkalibrierung.

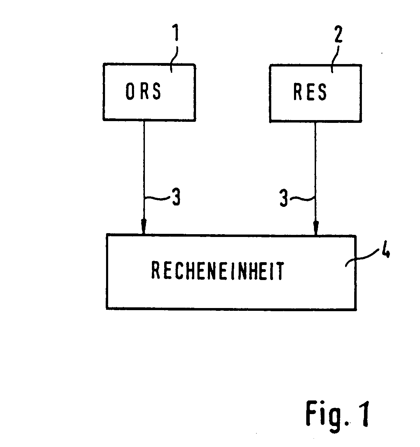

Die Einrichtung nach Fig. 1 besteht aus zwei Winkelgeschwindigkeitssensoren 1 und 2, die über Datenverbindungen 3 zur Übertragung der Meßwerte an eine Recheneinheit 4 angeschlossen sind. Der inertiale Winkelgeschwindigkeitssensor 1 dient als Orientierungssensoreinheit, während der andere Winkelgeschwindigkeitssensor 2 zur Bestimmung der Referenzorientierung vorgesehen ist. Beide liefern Winkelgeschwindigkeitsvektoren (Drehraten-Vektoren) an die Recheneinheit 4.

Die Referenzsensoreinheit 2 wird im folgenden mit RES und die Orientierungssensoreinheit 1 mit ORS abgekürzt. Die ORS und die RES sind jeweils durch eine Kreiseleinheit mit drei Kreiselmeßachsen (Kreiseltriade) realisierbar, die derart orientiert sind, daß innerhalb der Kreiseleinheit die Meßachsen nicht parallel zueinander und die drei Meßachsen einer Kreiseleinheit nicht in einer Ebene liegen, sondern vorzugsweise orthogonal angeordnet sind. Die ORS und die RES sind weiterhin mechanisch so aufzubauen, daß sie definiert und hinreichend starr untereinander und mit dem zu vermessenden Körper (z.B. durch Aufnahmevorrichtungen) sowie mit einem Referenzkörper (Referenzfläche) (z.B. mittels Adapter) mechanisch koppelbar sind.

Aufgabe der Recheneinheit 4 ist es, aus den von der ORS und der RES gemessenen Winkelgeschwindigkeiten (Drehraten) die relative Orientierung zwischen der Anfangsorientierung der ORS und deren Endorientierung zu berechnen, wobei die Anfangsorientierung bevorzugt mit der Orientierung des Referenzkörpers und die Endorientierung mit der Orientierung des zu vermessenden Körpers übereinstimmen oder doch wenigstens dem Referenzkörper und dem Körper eindeutig zugeordnet sind.

Zur Beschreibung des Meßverfahrens wird der Endorientierung entsprechend dem zu vermessenden Körper bzw. dessen Aufnahmevorrichtung ein kartesisches Koordinatensystem k_BGR zugeordnet, das bezogen auf den Körper (z.B. eine Baugruppe) eine feststehende Orientierung hat. Analog wird der Anfangsorientierung des Referenzkörpers bzw. der Referenzfläche ein Koordinatensystem k_REF zugeordnet. Die meßtechnische Aufgabe besteht nun darin, die Orientierung des Koordinatensystems k_BGR bezogen auf die Referenzorientierung zu bestimmen. Mathematisch läßt sich die Orientierung eines Koordinatensystems bezogen auf ein anderes Koordinatensystem durch verschiedene Parametersätze beschreiben. Üblich sind Eulerwinkel, Richtungskosinus-Matrizen oder Quaternionen (Mc Kern, "A study of transformation algorithmen for use in a digital computer", Masters thesis, T-493, Massachusetts Institute of Technology; Cambridge, 1968). Die verschiedenen Parameter sind ineinander umrechenbar. Hier wird die Quaternionendarstellung verwendet. Der RES und ORS werden gedanklich kartesische Koordinatensysteme k_RES bzw. k_ORS zugeordnet, und die von der RES und der ORS gemessenen Winkelgeschwindigkeiten werden bezogen auf diese Koordinatensysteme mit w_RES bzw. w_ORS bzeichnet.

Aufgabe der Recheneinheit ist es, aus den von der ORS und der RES gemessenen Winkelgeschwindigkeiten die relative Orientierung des Körpers (das Orientierungsquaternion q_[BGR;REF] bzw. eine geeignete andere Parameterdarstellung für die Orientierung) zu ermitteln. Mathematisch erfordert dies die Lösung der folgenden Quaternionen-Differentialgleichung in geeigneter Art und Weise:

$$\dot{q}[ORS;RES] = 0{,}5\,[q\_ORS;RES] \bigodot -w\_RES$$
$$-w\_ORS \bigodot q\_[ORS;RES] \qquad (1)$$

Darin bedeuten:

q_[ORS;RES]:     Quaternion zur Beschreibung einer Vektortransformation vom Koordinatensystem der ORS ins Koordinatensystem der RES,

w :     Winkelgeschwindigkeit-Vektor,

$\bigodot$ :     Quaternionenmultiplikation.

Anstelle dieser Quaternionen-Differentialgleichung kann selbstverständlich auch eine Euler-Winkel-Differentialgleichung oder eine Differentialgleichung anderer zur Beschreibung einer Orientierung geeigneter Parameter verwendet werden.

Algorithmen zur zeitdiskreten Lösung einer Differentialgleichung der obengenannten Art - auch dann, wenn die Ausgangsgrößen der Winkelgeschwindigkeitssensoren Winkelinkremente bzw. Drehraten darstellen - sind in der Inertialtechnik bekannt und zum Beispiel in der oben angegebenen Literaturstelle von Mc Kern beschrieben.

Die Vermessung der Orientierung eines Körpers (oder dessen Aufnahmevorrichtung) läßt sich in drei Phasen gliedern:

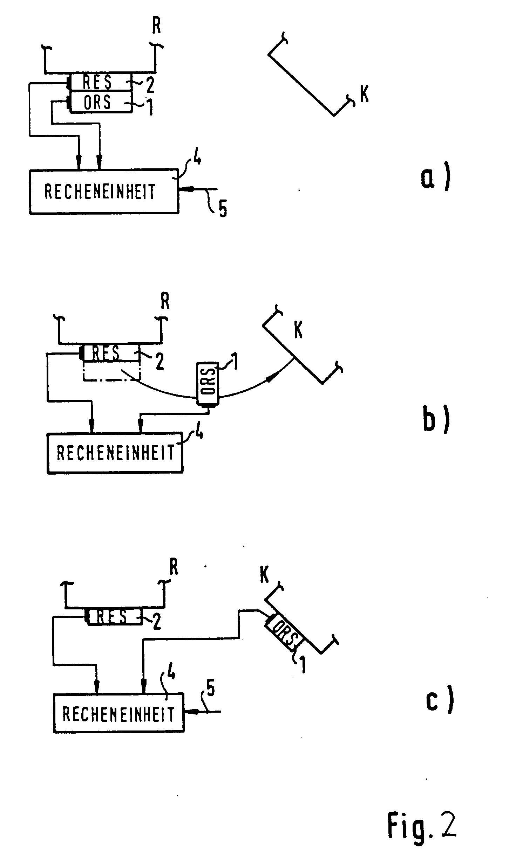

I. Die ORS und die RES sind mechanisch hinreichend starr mit dem Referenzkörper (Referenzfläche verbunden, vgl. die Anfangsorientierung in Fig. 2a, wo sich die ORS 1 und die RES 2 gemeinsam am Referenzkörper R befinden. Die Recheneinheit 4 wird über einen Eingang 5 zur Lösung der Quaternionendifferentialgleichungen initialisiert und zum Zeitpunkt tO gestartet.

II. Die ORS 1 wird entkoppelt und zu dem zu vermessenden Körper K geführt, während die RES 2 mit dem Referenzkörper R starr verbunden bleibt, vgl. Fig. 2b. Die Recheneinheit 4 integriert die Quaterionendifferentialgleichung gemäß Gleichung (1).

III. Die ORS 1 wird an den zu vermessenden Körper (bzw. dessen Aufnahmevorrichtung) gekoppelt (Endorientierung) und die Integration der Gleichung (1) gestoppt, und zwar wieder über den Eingang 5 zum Zeitpunkt t1, wie in Figur 2c dargestellt.

Unter der Voraussetzung, daß in Phase I die Koordinatensysteme k_RES, k_ORS und k_REF sowie in Phase III die Koordinatensysteme k_ORS und k_BGR parallel zueinander orientiert sind, beschreibt die Lösung der von der Recheneinheit während der Phase II integrierten Quaterionen-Differentialgleichung (1) die Orientierung des Koordinatensystems des zu vermessenden Körpers (Baugruppe oder Aufnahmevorrichtung) in Bezug auf das Referenzkoordinatensystem in Form einer Quaternion $\Delta q\_[BGR;REF]$. Es gilt unter den oben angegebenen Voraussetzungen:

$$\triangle q\_[ORS;RES] = \int_{to}^{t1} \dot{q}\_[ORS;RES]\ dt = \triangle q\_[BGR;REF] \qquad (2),$$

wobei die Buchstabenfolgen BGR und REF für den Körper (Baugruppe) bzw. den Referenzkörper stehen.

Wie schon erwähnt, sind geeignete Lösungsverfahren zur Integration dieser Differentialgleichung bekannt.

Sofern die oben angegebenen Bedingungen bezüglich der Orientierung der Koordinatensysteme in den Phasen I und III nicht gegeben sind, so sind doch die Beziehungen untereinander aufgrund der Konstruktionsgegebenheiten bekannt und können z.B. durch folgende Quaternionen beschrieben werden:

$$k\_RES = q\_[RES;REF](t0) \bigcirc k\_REF \bigcirc q\_*[RES;REF](t0) \qquad (3a)$$

$$k\_ORS = q\_[ORS;RES](t0) \bigcirc k\_RES \bigcirc q\_*[ORS;RES](t0)$$
$$\text{(nur Phase I)} \qquad (3b)$$

$$k\_BGR = q\_[BGR;ORS](t1) \bigcirc k\_ORS \bigcirc q\_*[BGR;ORS](t1)$$
$$\text{(nur Phase III)} \qquad (3c)$$

(*= konjugiert komplex).

Für das gesuchte Orientierungsquaternion $\Delta q\_[BGR;REF]$ folgt unter Berücksichtigung der Beziehungen (3a,b,c) und (1):

$$\Delta q\_[BGR;REF] = q\_[BGR;ORS](t=t1) \bigcirc q\_[ORS;RES]$$
$$\bigcirc q\_[RES;REF](t0) \qquad (4)$$

Die Quaternionen-Differentialgleichung gemäß (1) muß zum Zeitpunkt t0 mit dem Quaternion q_[ORS;REF](t0) initialisiert werden. Dieses Quaternion bzw. die dadurch beschriebene Orientierung ist natürlich aufgrund der konstruktiven Gegebenheiten bekannt.

Eine wesentliche Genauigkeitseinschränkung für das zuvor beschriebene Meßverfahren ist bedingt durch den während einer Messung zeitlich konstanten Anteil der Kreiseldrift, speziell der sogenannten "run to run"-Drift. Das ist derjenige Anteil der Kreiseldrift, der nach jedem Einschalten des Kreiselsystems, also bei jedem Kreisellauf in unterschiedlichem Maße, also in Abweichung von der durchschnittlichen Kreiseldrift auftritt und im Gegensatz zur durchschnittlichen Kreisldrift nicht ohne weiteres kompensierbar ist.

Im folgenden wird ein Verfahren beschrieben, wie die "run to run"-Drift kalibriert werden kann. Die hier vorgeschlagene Art der Kalibration läßt sich z.B. bei Flugzeugen zur Kalibration von INS-Systemen (inertialen Navigationssystemen) anwenden, sofern sie redundant ausgelegt sind, und ist auch zur Kalibration von Beschleunigungsmesser-Biasen, also zur Kalibration der Drift von Beschleunigungsmessern geeignet.

Das Verfahren wird am Beispiel der Kreisldrift beschrieben, gilt aber auch für andere Meßgrößen mit Offsetfehlern analog, insbesondere für Beschleunigungsmeßwerte. Die von der ORS und der RES gelieferten Meßvektoren lassen sich unter Berücksichtigung des konstanten Driftanteils bezogen auf die Koordinatensysteme k_ORS und k_RES wie

folgt beschreiben:

$$w\_ORS\_M = w\_ORS + d\_ORS \qquad (5a)$$
$$w\_RES\_M = w\_RES + d\_RES \qquad (5b)$$

Darin bedeuten:

w: Winkelgeschwindigkeit (Winkelinkrement)-Vektoren der Orientierungssensoreinheit (ORS) bzw. Referenzsensoreinheit (RES)

d: Drift (Driftinkrement)-Vektor der "run to run"-Drift

M: Postfix, das einen Meßwert kennzeichnet.

Im folgenden wird vorausgesetzt, daß die Koordinatensysteme k_ORS und k_RES bezogen auf die Kreiselmeßachsen eine zeitlich feststehende Orientierung haben; dies ist keine Einschränkung, da es sich um gedankliche Koordinatensysteme handelt.

Die Koordinatensysteme k_ORS und k_RES werden nun für verschiedene Meßschritte so umorientiert, daß der Summenvektor d+ entsprechend der Gleichung

$$d+ = d\_RES + d\_ORS \qquad (6a)$$

und der Differenzvektor d- entsprehend der Gleichung

$$d- = d\_RES - d\_ORS \qquad (6b)$$

(beziehungsweise deren Komponenten) meßtechnisch erfaßbar sind. In diesen Gleichungen stellen d_ORS und d_RES die Drift-(Driftinkrement-)Vektoren der ORS bzw. RES dar.

Die Umorientierung kann erreicht werden, indem die Koordinatensysteme k_RES und k_ORS ausgehend von einer Ursprungsorientierung gegeneinander gedreht werden und in definierten Orientierungen die Differenz bzw. die Summe der Meßvektoren (-Komponenten) d_RES, d_ORS berechnet werden. Hierbei sind die ORS und die RES mechanisch starr und hinreichend definiert zu koppeln.

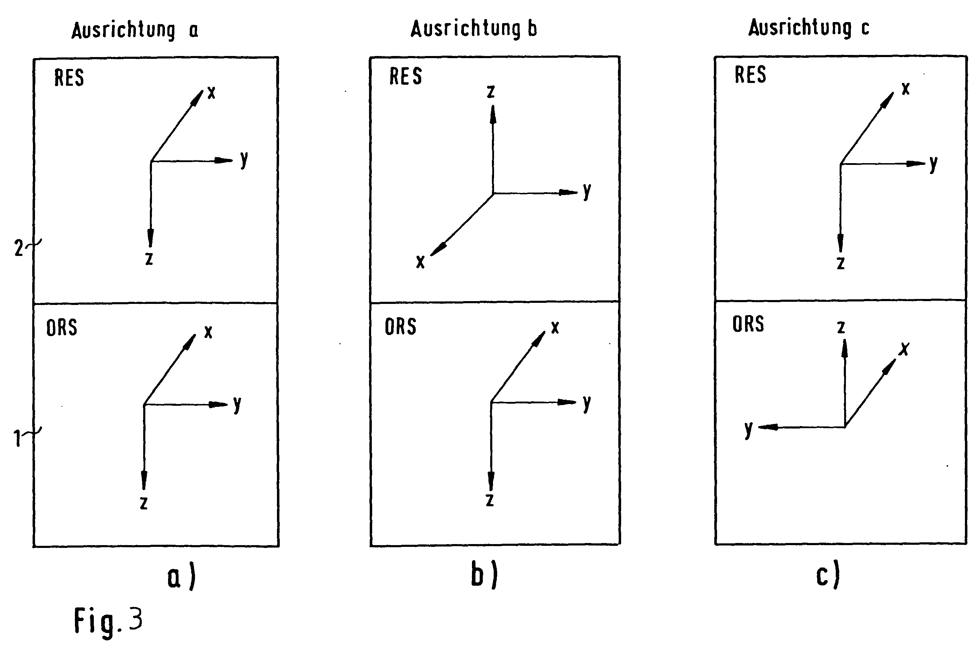

In Fig. 3 sind exemplarisch drei Orientierungen für die Koordinatensysteme k_ORS und k_RES angegeben. Fig. 3a zeigt die Ursprungsorientierung, von der ausgehend die Umorientierungen nach Fig. 3b und 3c vorgenommen werden, um jeweils die erforderlichen Messungen vorzunehmen. In der Ausrichtung a (Ursprungsorientierung) sind die Koordinatensysteme k_ORS und k_RES parallel zueinander orientiert. Da beide Systeme starr miteinander gekoppelt sind, ergibt die Differenz der gemessenen Winkelgeschwindigkeiten die Differenz der Driftvektoren d_RES - d_ORS.

Nach der ersten Umorientierung sind in der Ausrichtung nach Fig. 3b die x- und z-Achsen der Koordinatensysteme k_ORS und k_RES jeweils antiparallel zueinander orientiert. Durch Summenbildung der Meßkomponenten x, z der ORS und der RES erhält man die Summen der Driftkomponenten

d_RES (x) + d_ORS (x) bzw. d_RES (z) + d_ORS (z).

Nach einer Umorientierung, die zu der Ausrichtung nach Fig. 3c führt, sind die y-Achsen der Koordinatensysteme k_ORS und k_RES antiparallel zueinander orientiert. Die Summe der y-Meßkomponenten der ORS und der RES ergibt die Summe der y-Driftkomponenten d_RES (y) + d_RES (y).

Mit Hilfe von d+ und d- sowie der folgenden Gleichungen 7a und 7b lassen sich dann die Driftvektoren d_RES und d_ORS einfach berechnen und die Meßgrößen damit kalibrieren:

$$d\_RES = 0,5 \cdot (d+ + d-) \qquad (7a)$$
$$d\_ORS = 0,5 \cdot (d+ - d-) \qquad (7b)$$

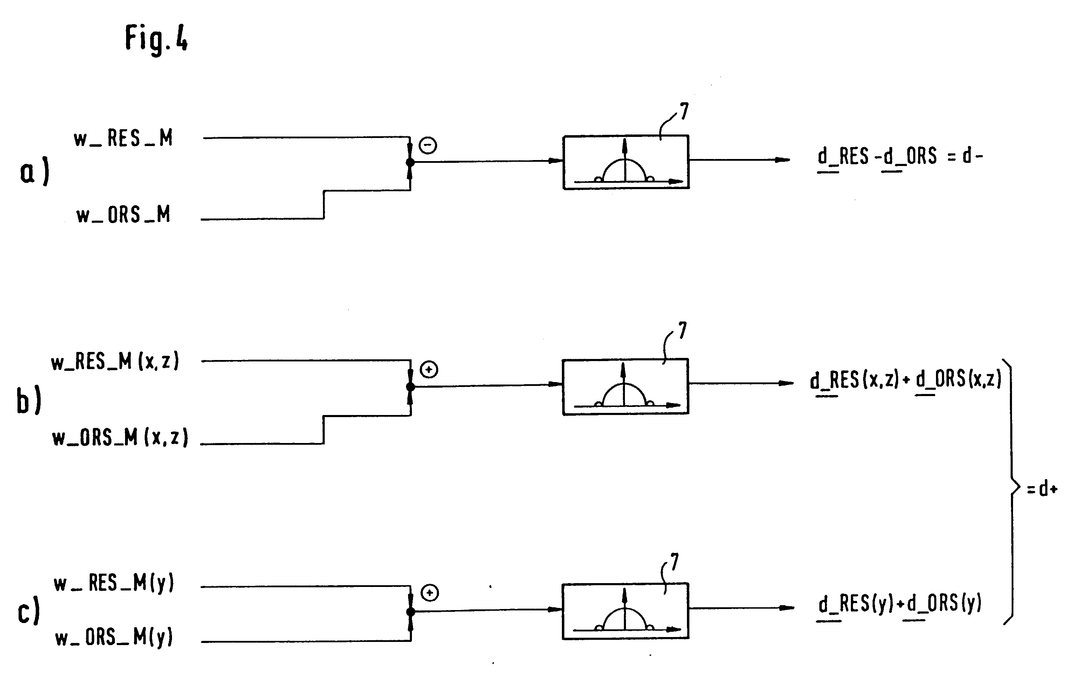

Für die Berechnung der Komponenten für die Ausrichtungen gemäß Fig. 3 sind in den Figuren 4a bis 4c Prinzipschaltbilder dargestellt. Fig. 4a gehört zur Ausrichtung a der Fig. 3, und entsprechend gehören die Figuren 4b, 4c zur Ausrichtung b bzw. c der Fig. 3. Den Summierern in den Figuren 4b, 4c bzw. dem Differenzbildner in Fig. 4a ist jeweils eine Einrichtung 7 zur Mittelwertbildung nachgeschaltet, die zur Unterdrückung von sogenannten "short-term" und "random-walk"-Driftanteilen dienen. Von den über die durchschnittliche Drift hinausgehenden Anteilen sind die "short-term"-Anteile diejenigen, die noch korreliert sind, während die "random-walk"-Driftanteile nicht mehr korreliert sind. Die Mittelungszeit der Mittelwertbildner 7 ist abhängig von der Varianz der Störgrößen und vom zulässigen Fehler bei der Driftberechnung.

Ein wesentlicher Vorteil dieses Verfahrens ist, daß aufgrund der Differenzbildung die Umgebungsdynamik w_ORS bzw. w_RES herausfällt.

Sofern die Ausgangsgrößen der Sensoreinheiten Winkelinkremente sind, werden mit dem zuvor beschriebenen Verfahren Driftinkremente berechnet. Dann gilt das in Fig. 4 dargestellte Verfahren zur Berechnung der Summen- bzw. Differenzdriftvektor-Komponenten entsprechend auch für eine zeitdiskrete Signalverarbeitung.

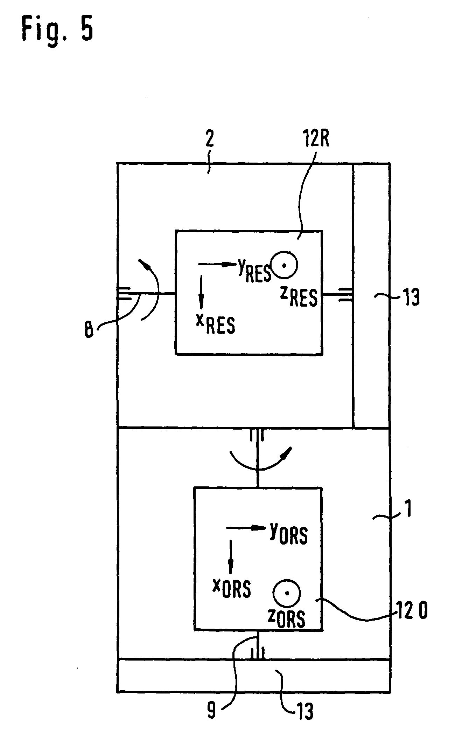

Um die Umorientierung der Koordinatensysteme von der Ursprungsorientierung entsprechend der Ausrichtung a der Fig. 3 in die anderen Ausrichtungen b, c nach den Figuren 3b, 3c vornehmen zu können, können die ORS und die RES nach Fig. 5 aufgebaut sein.

Hier sind die RES 2 und die ORS 1 jeweils mit einem Schwenkmechanismus 13 ausgerüstet, der es erlaubt, die jeweilige Kreiseltriade 12R bzw. 12O um 180° um eine quer zur Koordinate $z_{RES}$ bzw. $y_{ORS}$ stehende Achse 8 bzw. 9 zu schwenken. Eingezeichnet ist die jeweilige Lage der y- und z-Koordinaten entsprechend der Ursprungsorientierung, wie in Figur 3a angegeben. Durch Umklappen jeweils einer der Kreiseltriaden 12R bzw. 12O lassen sich die Ausrichtungen b bzw. c nach Figur 3 erzielen, in denen die notwendigen Messungen vorgenommen werden, wobei die RES und die ORS mechanisch starr miteinander gekoppelt bleiben, wie in Figur 5 gezeigt. Mit diesen Meßwerten kann dann die "run to run"-Drift kalibriert werden.

Soll das Verfahren zur Kalibration von Beschleunigungsmessern angewendet werden, so sind diese in Figur 5 an die Stelle der Kreiseltriade zu setzen. Insbesondere beim redundanten Systemen, bei welchen Sensoreinheiten mehrfach vorhanden sind, bietet sich das Kalibrationsverfahren als eine einfache Lösung an, beispielsweise in Flugzeugnavigationsanlagen.

Von besonderem Vorteil ist es, daß die RES und die ORS, wie in Figur 5 verdeutlicht, identisch aufgebaut sein können. Dies erleichtert auch die Anwendung in redundanten Systemen.

## Patentansprüche

1. Einrichtung zur Bestimmung der relativen Orientierung eines Körpers (K) gegenüber einer Referenzorientierung und mit folgenden Bestandteilen:

   a) eine bewegliche Orientierungssensoreinheit (1), die als inertialer Winkelgeschwindigkeitssensor ausgebildet ist und von einer Anfangsorientierung, die bezüglich der Referenzorientierung definiert ist, zu einer Endorientierung führbar ist, die bezüglich der Orientierung des Körpers (K) definiert ist,
   b) eine Referenzsensoreinheit für die Bestimmung der Referenzorientierung in Gestalt eines zweiten inertialen Winkelgeschwindigkeitssensors (2), dessen Orientierung bezüglich der Referenzorientierung definiert ist und bleibt,
   c) eine Recheneinheit (4), an welche die Winkelgeschwindigkeitssensoren (1, 2) ihre Meßwerte für die Winkelgeschwindigkeiten liefern zur Berechnung der relativen Orientierung des Körpers (K),
   d) eine Ausgabeeinheit für Signale entsprechend dem Berechnungsergebnis

   dadurch gekennzeichnet,
   daß die Orientierungssensoreinheit und die Referenzsensoreinheit jeweils eine Kreiseleinheit mit drei Kreiselmeßachsen aufweisen und
   daß die Recheneinheit (4) zur Integration der zur Beschreibung der Orientierung der Orientierungssensoreinheit (1) gegenüber der Referenzsensoreinheit (2) dienenden Differentialgleichung für diejenigen Werte der Winkelgeschwindigkeiten eingerichtet ist, die von der Orientierungs- und der Referenzsensoreinheit gemessen werden, solange die Orientierungssensoreinheit (1) von der Referenzsensoreinheit (2) zu dem zu vermessenden Körper (K) geführt wird.

2. Einrichtung nach Anspruch 1, dadurch gekennzeichnet, daß die Orientierungssensoreinheit (1) mit der Referenzsensoreinheit (2) mittelbar oder unmittelbar mechanisch starr koppelbar und um 180° aus einer Ursprungsorientierung um eine Orientierungssensor-Schwenkachse (9) schwenkbar ist, die senkrecht zu einer ihrer Meßachsen verläuft und die in einer Ebene mit einer Referenzsensor-Schwenkachse (8) liegt, um welche die Referenzsensoreinheit (2) um 180° aus ihrer Ursprungsorientierung schwenkbar ist und die senkrecht zur Orientierungssensor-Schwenkachse (9) und einer ihrer Meßachsen verläuft.

3. Verfahren zum Kalibrieren einer Meßeinrichtung, die Meßwerte liefert, die sich auf Bewegungen in einem Inertialsystem beziehen und mit einem Offset behaftet sind, mit einem Paar von Sensoreinheiten (1, 2), die jeweils mindestens zwei zueinander senkrecht verlaufende Meßachsen aufweisen, wobei eine Sensoreinheit (1) um 180° aus einer Ursprungsorientierung um eine Schwenkachse (9) schwenkbar ist, die senkrecht zu einer der Meßachsen dieser Sensoreinheit (1) verläuft und die in einer Ebene mit einer zur anderen Sensoreinheit (2) gehörenden Schwenkachse (8) liegt, um welche diese andere Sensoreinheit (2) um 180° aus ihrer Ursprungsorientierung schwenkbar ist und die (8) senkrecht zur Schwenkachse (9) der ersten Sensoreinheit (1) und zu einer der Meßachsen der anderen Sensoreinheit (2) verläuft, wobei die beiden Sensoreinheiten (1, 2) während der Kalibrierung mechanisch starr miteinander gekoppelt werden, dadurch gekennzeichnet, daß folgende Verfahrensschritte durchgeführt werden:

   a) es wird in einer Ursprungsorientierung der Sensoreinheiten (1, 2) von den beiden Sensoreinheiten jeweils ein Tripel von Meßwerten für einen Meßwert-Vektor ermittelt, so daß aus diesen beiden Tripeln ein Differenz-Vektor (d-) bildbar ist,

b) nur eine der Sensoreinheiten (2) wird um 180° um eine erste Achse (8) geschwenkt, und danach werden von den Sensoreinheiten (1, 2) jeweils zwei von drei Meßwert-Komponenten als Komponenten-Paar ermittelt, so daß diese beiden Komponenten-Paare zu einem Summenvektor summierbar sind,

c) die andere Sensoreinheit (1) wird um 180° um eine zweite Achse (9) geschwenkt, die senkrecht auf der ersten Achse (8) steht, und von den Sensoreinheiten wird jeweils die dritte Meßwert-Komponente ermittelt, so daß diese beiden dritten Meßwert-Komponenten zu einem Summenwert summierbar sind,

d) aus den Komponenten-Paaren und den dritten Meßwert-Komponenten wird ein Summen-Vektor (d+) gebildet, der sich aus Komponenten-Paaren antiparallel liegender Meßwert-Komponenten zusammensetzt und der zusammen mit dem Differenz-Vektor (d-) für die Sensoreinheiten (1, 2) jeweils einem Drift-Vektor zur Kalibrierung bestimmt.

4. Verfahren nach Anspruch 3, dadurch gekennzeichnet, daß jeweils bei der Bildung der Summen- und Differenz-Vektoren eine Mittelwertbildung erfolgt.

5. Verfahren zur Bestimmung der relativen Orientierung eines Körpers (k) gegenüber einer Referenzorientierung mit Hilfe einer Orientierungssensoreinheit, die von einer Referenzfläche eines Referenzkörpers zu einer zu vermessenden Fläche des Körpers geführt wird, wobei

a) eine Referenzsensoreinheit vorgesehen und diese wie die Orientierungssensoreinheit als inertialer Winkelgeschwindigkeitssensor ausgebildet ist,

b) anfangs die Orientierungssensoreinheit und die Referenzsensoreinheit starr mit dem Referenzkörper verbunden werden,

c) die Orientierungssensoreinheit von der Referenzsensoreinheit entkoppelt und zu dem vermessenden Körper (K) geführt wird, während die Referenzsensoreinheit starr mit dem Referenzkörper (R) verbunden bleibt,

d) die Orientierungssensoreinheit an den zu vermessenden Körper (K) gekoppelt wird,

dadurch gekennzeichnet, daß

e) während die Orientierungssensoreinheit von der Referenzfläche des Referenzkörpers zu der zu vermessenden Fläche des Körpers (K) geführt wird, die Komponenten der Drehwinkelgeschwindigkeit der Orientierungssensoreinheit gemessen und von einer Recheneinheit zu einem Ergebnis verarbeitet werden, das den Winkel zwischen der Referenzfläche und der zu messenden Fläche angibt,

f) in der Recheneinheit (4) die Integration der zur Beschreibung der Orientierung der Orientierungssensoreinheit gegenüber der Referenzsensoreinheit dienenden Differentialgleichung zwischen den obigen Verfahrensschritten b) und c) gestartet und nach dem Verfahrensschritt d) beendet wird.

6. Verfahren nach Anspruch 5, dadurch gekennzeichnet, daß jeweils drei Komponenten der Drehwinkelgeschwindigkeiten, die von der Orientierungssensoreinheit bzw. der Referenzsensoreinheit gemessen werden, der Recheneinheit (4) zugeführt werden.

## Claims

1. Device for determining the relative orientation of a body (K) with respect to a reference orientation and having the following components:

a) a movable orientation sensor unit (1), which is designed as an inertial angular velocity sensor and can be guided from an initial orientation, which is defined in relation to the reference orientation, to a final orientation, which is defined in relation to the orientation of the body (K),

b) a reference sensor unit for the determination of the reference orientation in the form of a second inertial angular velocity sensor (2), whose orientation in relation to the reference orientation is and remains defined,

c) a computing unit (4), to which the angular velocity sensors (1, 2) supply their measured values for the angular velocities for calculating the relative orientation of the body (K),

d) an output unit for signals corresponding to the calculation result

characterized

in that the orientation sensor unit and the reference sensor unit in each case have one gyroscope unit with three gyroscope measurement axes and

in that the computing unit (4) for the integration of the differential equation used to describe the orientation of the orientation sensor unit (1) with respect to the reference sensor unit (2) is set up for those values of the angular velocities which are measured by the orientation sensor unit and the reference sensor unit, as long as the orientation sensor unit (1) is guided from the reference sensor unit (2) to the body (K) to be surveyed.

2. Device according to Claim i, characterized in that the orientation sensor unit (1) can be mechanically rigidly coupled, directly or indirectly, to the reference sensor unit (2) and can be pivoted through 180° from an original orientation about an orientation sensor pivot axis (9) which extends at right angles to one of its measurement axes and is located in a plane having a reference sensor pivot axis (8) about which the reference sensor unit (2) can be pivoted through 180° from its original orientation and which extends at right angles to the orientation sensor pivot axis (9) and one of its measurement axes.

3. Method for calibrating a measurement device, which supplies measurement values which relate to movements in an inertial system and are affected by an offset, having a pair of sensor units (1, 2) which in each case have at least two measurement axes extending at right angles to each other, one sensor unit (1) being able to be pivoted through 180° from an original orientation about a pivot axis (9) which extends at right angles to one of the measurement axes of this sensor unit (1) and which is located in a plane with a pivot axis (8) belonging to the other sensor unit (2), about which pivot axis (8) this other sensor unit (2) can be pivoted through 180° from its original orientation and which (8) extends at right angles to the pivot axis (9) of the first sensor unit (1) and to one of the measurement axes of the other sensor unit (2), the two sensor units (1, 2) being mechanically rigidly coupled to each other during the calibration, characterized in that the following method steps are carried out:

a) in an original orientation of the sensor units (1, 2), a triplet of measured values for one measured value vector is determined in each case by the two sensor units, so that from these two triplets a difference vector (d-) can be formed,
b) only one of the sensor units (2) is pivoted through 180° about a first axis (8) and, subsequently, in each case two of three measured value components are determined by the sensor units (1, 2) as a component pair, so that these two component pairs can be summed to form a sum vector,
c) the other sensor unit (1) is pivoted through 180° about a second axis (9) which is at right angles to the first axis (8), and in each case the third measured value component is determined by the sensor units, so that these two third measured value components can be summed to form a sum value,
d) from the component pairs and the third measured value components, there is formed a sum vector (d+) which is composed of component pairs of measured value components located in antiparallel and which, together with the difference vector (d-) for the sensor units (1, 2), in each case determines a drift vector for calibration.

4. Method according to Claim 3, characterized in that in each case an average value is formed during the formation of the sum and difference vectors.

5. Method for determining the relative orientation of a body (K) with respect to a reference orientation with the aid of an orientation sensor unit, which is guided from a reference surface of a reference body to a surface to be surveyed of the body,

a) a reference sensor unit being provided and the latter being designed, like the orientation sensor unit, as an inertial angular velocity sensor,
b) the orientation sensor unit and the reference sensor unit initially being rigidly connected to the reference body,
c) the orientation sensor unit being uncoupled from the reference sensor unit and guided to the body (K) to be surveyed, while the reference sensor unit remains rigidly connected to the reference body (R),
d) the orientation sensor unit being coupled to the body (K) to be surveyed,
characterized in that
e) while the orientation sensor unit is being guided from the reference surface of the reference body to the surface to be surveyed of the body (K), the components of the rotary angular velocity of the orientation sensor unit are measured and are processed by a computing unit to form a result which specifies the angle between the reference surface and the surface to be measured,
f) in the computing unit (4), the integration of the differential equation used to describe the orientation of the orientation sensor unit with respect to the reference sensor unit is started between the above method steps b) and c) and is terminated after the method step d).

6. Method according to Claim 5, characterized in that in each case three components of the rotary angular velocities, which are measured by the orientation sensor unit or the reference sensor unit, respectively, are fed to the computing unit (4).

**Revendications**

1. Installation pour déterminer l'orientation relative d'un corps (K) par rapport à une orientation de référence, comprenant les composants suivants :

   a) une unité d'orientation mobile (1) réalisée comme capteur de la vitesse angulaire, et qui conduit d'une orientation inertielle définie par rapport à l'orientation de référence à une orientation finale définie par rapport à l'orientation du corps (K),
   b) une unité de capteur de référence pour déterminer l'orientation de référence sous la forme d'un second capteur de vitesse angulaire inertielle (2) dont l'orientation est définie par rapport à l'orientation de référence et reste par rapport à celle-ci,
   c) une unité de calcul (4) recevant les valeurs de mesure des vitesses angulaires fournies par les capteurs de vitesses angulaires (1, 2) pour calculer l'orientation relative du corps (K),
   d) une unité de sortie pour les signaux correspondant au résultat du calcul,

   caractérisé en ce que l'unité d'orientation et l'unité de capteur de référence présentent chaque fois une unité gyroscopique à trois axes de mesure gyroscopique et l'unité de calcul (4) est prévue pour intégrer l'équation différentielle servant à décrire l'orientation de l'unité de capteur d'orientation (1) par rapport à l'unité de capteur de référence (2) pour les valeurs des vitesses angulaires mesurées par l'unité à capteur d'orientation et l'unité à capteur de référence aussi longtemps que l'unité à capteur d'orientation (1) est conduite par l'unité à capteur de référence (2) vers le corps (K) à mesurer.

2. Installation selon la revendication 1, caractérisée en ce que l'unité à capteur d'orientation (1) est couplée rigidement directement ou indirectement de manière mécanique à l'unité de capteur de référence (2) et peut être pivotée de 180° de sa position d'origine autour de l'axe de pivotement (9) du capteur d'orientation, axe perpendiculaire à l'un de ses axes de mesure et qui se situe dans un plan avec un axe de pivotement (8) du capteur de référence autour duquel l'unité à capteur de référence (2) peut pivoter de 180° à partir de son orientation initiale, cet axe étant perpendiculaire à l'axe de pivotement (9) du capteur d'orientation et à l'un de ses axes de mesure.

3. Procédé de calibrage d'une installation de mesure fournissant des valeurs de mesure se rapportant à des mouvements dans un système à inertie et qui sont entachées d'un décalage, comprenant une paire d'unités de capteurs (1, 2) ayant chaque fois au moins deux axes de mesure perpendiculaires l'un à l'autre, une unité de capteur (1) pouvant pivoter de 180° autour d'un axe de pivotement (9) par rapport à son orientation initiale, cet axe étant perpendiculaire à l'un des axes de mesure de cette unité de capteur (1) et cet axe est compris dans un plan avec l'axe de pivotement (8) appartenant à l'autre unité de capteur (2) et autour duquel cette autre unité de capteur (2) peut pivoter de 180° à partir de son orientation initiale, cet axe (8) étant perpendiculaire à l'axe de pivotement (9) de la première unité de capteur (1) ainsi qu'à l'un des axes de mesure de l'autre unité de capteur (2), les deux unités de capteur (1, 2) étant couplées rigidement, mécaniquement pendant le calibrage, caractérisé en ce qu'on effectue les étapes de procédé suivantes :

   a) dans une orientation initiale des unités de capteur (1, 2), les deux unités de capteur déterminent chaque fois un triplet de valeurs de mesure pour un vecteur de valeur de mesure, pour permettre de former un vecteur de différence (d-) à partir des deux triplets,
   b) on pivote seulement l'une des unités de capteur (2) de 180° autour d'un premier axe (8) puis les unités de capteur (1, 2) déterminent chaque fois deux des trois composantes de valeurs de mesure comme paires de composantes pour additionner ces deux paires de composantes et donner un vecteur somme,
   c) on pivote l'autre unité de capteur (1) de 180° autour d'un second axe (9), cet axe étant perpendiculaire au premier axe (8) et les unités de capteur déterminent chaque fois les troisièmes composantes de valeurs de mesure pour additionner ces deux troisièmes composantes de valeurs de mesure et former une somme,
   d) à partir des paires de composantes et des troisièmes composantes de valeurs de mesure on forme un vecteur somme (d+) comprenant les paires de composantes des composantes de valeurs de mesure antiparallèles, et qui avec le vecteur de différence (d-) pour les unités de capteur (1, 2) définit chaque fois un vecteur de dérive pour le calibrage.

4. Procédé selon la revendication 3, caractérisé en ce qu'en formant les vecteurs de somme et de différence on forme une valeur moyenne.

5. Procédé pour déterminer l'orientation relative d'un corps (k) par rapport à une orientation de référence à l'aide d'une unité de capteur d'orientation conduite à partir d'une surface de référence d'un corps de référence vers une surface à mesurer du corps, selon lequel

a) on prévoit une unité de capteur de référence réalisée comme l'unité de capteur d'orientation comme capteur de mesure d'angle à inertie,

b) initialement, l'unité de capteur d'orientation et l'unité de capteur de référence sont reliées rigidement au corps de référence,

c) on découple l'unité de capteur d'orientation par rapport à l'unité de capteur de référence et on la conduit au corps à mesurer (K) pendant que l'unité de capteur de référence reste reliée rigidement au corps de référence (R),

d) l'unité de capteur d'orientation est couplée au corps (K) à mesurer,

caractérisé en ce que

e) pendant que l'unité de capteur d'orientation est conduite à partir de la surface de référence du corps de référence vers la surface à mesurer du corps (K), on mesure les composantes de la vitesse de rotation angulaire de l'unité de capteur d'orientation et on traite avec une unité de calcul pour obtenir un résultat donnant l'angle compris entre la surface de référence et la surface à mesurer,

f) dans l'unité de calcul (4) on démarre l'intégration de l'équation différentielle servant à décrire l'orientation de l'unité de capteur d'orientation par rapport à l'unité de capteur de référence, entre les étapes de procédé b) et c) ci-dessus et on la termine après l'étape de procédé d.

6. Procédé selon la revendication 5, caractérisé en ce qu'on mesure chaque fois trois composantes des vitesses de rotation angulaires par l'unité de capteur d'orientation ou l'unité de capteur de référence et ces composantes sont transmises à l'unité de calcul (4).

1

2

| ORS | | RES |

3       3

| RECHENEINHEIT | 4 |

Fig. 1

Fig. 2

Ausrichtung a

RES

x  y  z

2 —

ORS

x  y  z

1 —

a)

Ausrichtung b

RES

z  y  x

ORS

x  y  z

b)

Ausrichtung c

RES

x  y  z

ORS

z  x  y

c)

Fig.3

EP 0 557 591 B1

# Fig.4

a)

w_RES_M

w_ORS_M

$\ominus$    7

$\underline{d}$_RES $-\underline{d}$_ORS $= d-$

b)

w_RES_M (x,z)

w_ORS_M (x,z)

$\oplus$    7

$\underline{d}$_RES (x,z) $+ \underline{d}$_ORS (x,z)

c)

w_RES_M(y)

w_ORS_M(y)

$\oplus$    7

$\underline{d}$_RES(y) $+\underline{d}$_ORS(y)

$= d+$

EP 0 557 591 B1

# Fig. 5